# EUROPÄISCHE PATENTSCHRIFT

(11) **EP 3 122 447 B1**
(45) Veröffentlichungstag und Bekanntmachung des Hinweises auf die Patenterteilung: **17.10.2018**
(21) Anmeldenummer: 15707656.3
(22) Anmeldetag: 04.03.2015
(51) Int. Cl.: B01F 17/00, C08G 63/47, C08G 63/91

(54) **DISPERGIERHARZE**
DISPERSING RESINS
RÉSINES DE DISPERSION

(30) Priorität: 26.03.2014 DE 102014205680
(43) Veröffentlichungstag der Anmeldung: 01.02.2017
(73) Patentinhaber: Evonik Degussa GmbH, 45128 Essen (DE)
(72) Erfinder: FAVRESSE, Philippe, 40880 Ratingen (DE); BRÖTZMANN, Andre, 45130 Essen (DE); VOGT, Anette, 45277 Essen (DE); ROLAND, Katrin, 45257 Essen (DE); SCHIERLE, Thorsten, 45289 Essen (DE); MÄDCHE, Irina, 47800 Krefeld (DE); MAUS, Christian, 47228 Duisburg (DE)
(86) Internationale Anmeldenummer: PCT/EP2015/054494
(87) Internationale Veröffentlichungsnummer: WO 2015/144404

(56) Entgegenhaltungen:
- EP-A2- 1 685 895
- WO-A1-01/21298
- WO-A1-98/19784
- DE-A1-102006 059 558
- US-A- 4 224 212

## Beschreibung

Die vorliegende Erfindung betrifft neuartige Dispergierharze, deren Herstellung und deren Verwendung zur Dispergierung von Feststoffen.
Für die Dispergierung von Feststoffen (z. B. Füllstoffen, Farbstoffen oder Pigmenten) in flüssigen Medien werden in der Regel Dispergierharze eingesetzt, um eine effektive Stabilisierung der Feststoffe zu erreichen, die benötigten mechanischen Scherkräfte zu reduzieren und somit einen möglichst hohen Füllgrad zu ermöglichen. Die Dispergierharze benetzen und/oder belegen als oberflächenaktive Materialien die Oberfläche der zu dispergierenden Partikel und stabilisieren diese gegen eine unerwünschte Reagglomeration. Somit erleichtern Dispergierharze bei der Herstellung von Farben, Lacken, Druckfarben und sonstigen Beschichtungsstoffen die Einarbeitung von Feststoffen, wie zum Beispiel Füllstoffen und Pigmenten, die als wichtige Formulierungsbestandteile das optische Erscheinungsbild und die physikalisch-chemischen Eigenschaften von derartigen Systemen wesentlich bestimmen. Für eine optimale Ausnutzung müssen diese Feststoffe zum einen gleichmäßig in den Formulierungen verteilt werden, zum anderen muss die einmal erreichte Verteilung stabilisiert werden.
Eine Vielzahl verschiedener Substanzen findet heute Verwendung als Dispergiermittel für Feststoffe. Neben sehr einfachen, niedermolekularen Verbindungen, wie z. B. Lecithin, Fettsäuren und deren Salzen oder Alkylphenolethoxylaten, werden auch komplexere hochmolekulare Strukturen als Dispergierharze eingesetzt. Hier sind es speziell amino- und amidofunktionelle Systeme, die breite Verwendung finden.
DE 2830860, WO 00/24503 und WO 01/21298 beschreiben zum Beispiel Dispergierharze auf der Basis von Polyester-modifizierten Polyaminen. EP 893155 beschreibt Polyaminsalze und deren Einsatz als Dispergierharze für Pigmente und Füllstoffe. Die Polyester basieren auf Hydroxycarbonsäuren oder Lactonen. Weitere Dispergierharze sind aus DE 102006059558 und EP 1685895 A2 bekannt. Der Einsatz von Dispergierharzen kann auch zu Nachteilen führen, beispielsweise im Hinblick darauf, dass häufig hohe Gehalte an Dispergieradditiven beim Einsatz in Pigmentpasten erforderlich sind, die erreichbaren Pigmentierungshöhen der Pasten unbefriedigend niedrig sind, die Stabilität der Pasten und damit deren Viskositätskonstanz unzureichend sind, die Verwendung von Lösungsmitteln sich nicht vermeiden lässt oder aber, dass die Flockulation und die Aggregation sich nicht immer vermeiden lassen. Ebenfalls mangelt es oft an der Farbtonkonstanz nach Lagerung der Pasten sowie an der Kompatibilität zu diversen Bindemitteln und Pigmenten. Bei der Verwendung aus dem Stand der Technik bekannter Dispergieradditive wird in vielen Fällen auch die Wasserfestigkeit oder Lichtbeständigkeit von Beschichtungsstoffen negativ beeinflusst oder es entsteht bei deren Verwendung unerwünschter Schaum. Auch wird vielfach durch mangelnde Verträglichkeit der Dispergierharze in kommerziell genutzten Beschichtungsmedien in unerwünschter Weise der Glanz beeinträchtigt. Darüber hinaus wird immer mehr der Fokus auf kommerziell verfügbare und preiswerte Rohstoffe gelegt, die, wenn möglich, sogar aus erneuerbaren Quellen bezogen werden sollen.

Es besteht daher ein wachsender Bedarf an Dispergierharzen für Feststoffe, die gegenüber dem Stand der Technik weiter verbesserte Eigenschaften zeigen. Gefordert sind dabei insbesondere Dispergierharze, die eine möglichst hohe stabilisierende Wirkung auf eine Vielzahl von unterschiedlichen Feststoffen haben.

Aufgabe der vorliegenden Erfindung ist somit die Bereitstellung von Dispergierharzen, die verbesserte anwendungstechnische Eigenschaften aufweisen und z. B. in vorteilhafter Weise für die Dispergierung von Feststoffen eingesetzt werden können.

Die vorgenannte Aufgabe wird durch neue Dispergierharze gemäß der vorliegenden Erfindung gelöst.

Somit sind ein erster Gegenstand der vorliegenden Erfindung Dispergierharze der allgemeinen Formel (I),

T-P-Z-T (I)

worin
T eine die Polymerisation beendende Gruppe ist,
Z eine basische Gruppe oder ein Rest, der eine basische Gruppe enthält, ist
P ein Polyester auf Basis von Di- oder Polycarbonsäuren und Di- oder Polyolen ist, einschließlich Salzen von Verbindungen der Formel (I).

Dispergierharze der vorliegenden Erfindung zeigen eine gute Dispergierleistung, ohne die Viskosität und das rheologische Verhalten der entsprechenden Formulierungen negativ zu beeinflussen. So kann mit den Harzen der vorliegenden Erfindung die Einsatzmenge von hochpreisigen Pigmenten reduziert werden, ohne Einbußen bei der Farbstärke in Kauf nehmen zu müssen. Weiterhin wird das Viskositätsverhalten von Pasten, Farben, Lacken, Druckfarben und sonstigen Beschichtungsstoffen, die Farbstoffe, Feststoffe, wie Füllstoffe und/oder Pigmente enthalten, wesentlich durch das verwendete Dispergierharz mitbestimmt. Hier erfüllen die erfindungsgemäßen Dispergierharze die übliche Forderung, dass eine möglichst geringe Viskosität in den flüssigen Farben und Lacken hervorgerufen und auch beibehalten wird, wobei ein newtonisches Viskositätsverhalten bevorzugt ist. Darüber hinaus basieren die erfindungsgemäßen Dispergierharze auf kommerziell verfügbaren und preiswerten Rohstoffen. Dies gilt insbesondere für den Teil P der erfindungsgemäßen Harze der Formel (I), bei denen Dicarbonsäuren und Diole zur Bildung der Polyester eingesetzt werden, so dass auf den aus dem Stand der Technik bekannten und aufwendigen Einsatz von Caprolacton verzichtet werden kann. Diese Verwendung von preiswerten und kommerziell verfügbaren Rohstoffen, insbesondere für den Teil P, erlaubt eine breitere Strukturvariation und Liefersicherheit hinsichtlich der erfindungsgemäßen Dispergierharze.

Bestandteil der erfindungsgemäßen Dispergierharze der Formel (I) sind Polyestereinheiten P auf Basis von Di- oder Polycarbonsäuren und Di- oder Polyolen. Bei den Polyestereinheiten P der Dispergierharze der Formel (I) handelt es sich in der Regel um carboxy-funktionelle Polyester mit ggf. noch freien OH Gruppen, die in einer Folgereaktion weiter zum Teil oder vollständig mit z. B. Anhydriden zu carboxy funktionellen Polyester umgesetzt werden können. Insbesondere handelt es sich um OH-funktionelle, lineare oder leicht verzweigte, gesättigte oder ungesättigte, vorzugsweise amorphe Copolyester.

Di- oder Polycarbonsäuren im Sinne der vorliegenden Erfindung umfassen die freien Säuren, deren Anhydride oder Ester der genannten Dicarbonsäuren, wobei im Falle von Estern niedermolekulare Ester, wie z. B. Methyl- oder Ethylester, bevorzugt sind.

Geeignete Di- oder Polycarbonsäuren sind beispielsweise Phthalsäure, Isophthalsäure, Terephthalsäure, 1,2-Cyclohexandicarbonsäure und Isomere, Bernsteinsäure, Sebazinsäure, Methyltetra-, Methylhexahydrophthalsäure, Hexahydrophthalsäure, Tetrahydrophthalsäure, Dodecandisäure, Adipinsäure, Glutarsäure, Citracon-, Fumar-, Itacon-, Malein-, Mesaconsäure, Azelainsäure, Pyromellitsäure und/oder Trimellitsäure, deren Säureanhydride und/oder niedermolekularen Alkylester wie z. B. Methylester.

Geeignete Diole oder Polyole sind insbesondere Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Dicidol, Glycerin, 1,6-Hexandiol, Neopentylglycol, Bisphenol A, B, C, F, Norbornylenglykol, 1,4-Benzyldimethanol und -ethanol und/oder 2,4-Dimethyl-2-ethylhexan-1,3-diol.

Vorzugsweise umfassen die Polyestereinheiten P 25 bis 75 Gew.-% Di- oder Polycarbonsäuren und 25 bis 75 Gew.-% Diole oder Polyole, wobei die Summe der Diole oder Polyole und die Summe der Di- oder Polycarbonsäuren 100 Gew.-% ergeben.

Die Herstellung von Polyestern ist dem Fachmann hinlänglich bekannt. Sie werden in der Regel durch Kondensation von Di- oder Polycarbonsäuren oder deren Anhydriden mit Diolen oder Polyolen hergestellt. Ihre Eigenschaften hängen weitgehend von Art und Mengenverhältnis der Ausgangsstoffe ab.

Im Rahmen der vorliegenden Erfindung werden die Polyestereinheiten durch (halb)kontinuierliche oder diskontinuierliche Veresterung und Kondensation der Ausgangssäuren und Ausgangsalkohole, in einstufiger oder zweistufiger Fahrweise hergestellt. Die Synthese der Polyestereinheiten erfolgt bevorzugt über eine Schmelze-Kondensation. Hierzu werden die eingesetzten Di- oder Polycarbonsäuren und Di- oder Polyole zur Reaktion gebracht. Die Polykondensation erfolgt in der Schmelze bei Temperaturen zwischen 130 und 280 °C innerhalb von 3 bis 30 Stunden. Dabei wird zunächst ein Großteil der freiwerdenden Wassermenge bei Normaldruck abdestilliert. Im weiteren Verlauf wird das übrige Wasser sowie leicht flüchtige Di- oder Polyole abgespalten, bis das angestrebte Molekulargewicht oder die gewünschte Säurezahl erreicht ist. Gegebenenfalls kann dies durch verminderten Druck oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylol. Typische Katalysatoren sind Organotitan- oder Zinn-verbindungen wie Tetrabutyltitanat oder Dibutylzinnoxid.

Denkbar sind auch Katalysatoren, die auf anderen Metallen wie z. B. Zink, zum Beispiel Zinkacetat, Antimon oder Zirkonium, zum Beispiel Zirkoniumisopropoxid, basieren, sowie metallfreie Veresterungskatalysatoren wie beispielsweise Toluolsulfonsäure oder eine starke organische Säure, wie Halogenessigsäure, zum Beispiel Trifluoressigsäure. Weiterhin sind weitere Additive und Fahrhilfsmittel wie Antioxidantien oder Radikal- und Farbstabilisatoren möglich. Bevorzugt erfolgt die Umsetzung in einer Inertgas-Atmosphäre, beispielsweise unter Stickstoff.

Anschließend werden die somit hergestellten Polyester in einem weiteren Schritt mit Dicarbonsäuren oder deren Anhydriden weiter zu säurefunktionellen Polyestern umgesetzt. Diese Polyester werden als P-COOH bezeichnet. Bezogen auf die OH Gruppen werden zwischen 20 % bis 100 %, bevorzugt zwischen 30 % bis 80 % besonders bevorzugt 40 % und 70 % mit Dicarbonsäuren oder deren Anhydriden umgesetzt. Vorzugsweise werden Anhydride im vorliegenden Schritt eingesetzt. Verwendete Anhydride sind zum Beispiel Anhydride der Phthalsäure (PSA), 1,2-Cyclohexandicarbonsäure, Bernsteinsäure, Maleinsäure, Methyltetrahydrophthalsäure, Methylhexahydrophthalsäure (MHH-PSA), Hexahydrophthalsäure, und/oder Trimellitsäure.

Die erfindungsgemäßen Polyester weisen insbesondere ein Mn von 700 bis 10.000 g/mol, bevorzugt zwischen 900 bis 4.000 g/mol und ein Mw von 1.500 bis 40.000 g/mol, bevorzugt zwischen 2.000 bis 15.000 g/mol auf. Die Molmassen werden im Rahmen der vorliegenden Erfindung durch Größenausschlusschromatographie (SEC) bestimmt. Dazu werden drei Säulen der Fa. Merck (PS 400, 250*7 mm, PS 40, 250*7 mm, und PS 1, 250*7 mm) mit einer Teilchengröße von 5 µm in Reihe kombiniert. Nach der Kalibration werden 20 µl der Polyesterlösung in Tetrahydrofuran (c(Polyester) = 20 mg/ml) bei 40 °C mit einem Rheodyne 7125 Injektor injiziert und mit einer Flussrate von 1 ml/min (HPLC Pumpe 510 von Waters) bei 40 °C mit entgastem Tetrahydrofuran als mobiler Phase und einem Differentialrefraktometer bei 40 °C (Model 410 von Waters) analysiert. Die Auswertung erfolgt nach Kalibration gegen Polystyrolstandards, die in der zuvor beschriebenen Weise durchgeführt wird. Polystyrolstandards (Standard 1 Mp 377400, Mp 96000, Mp 20650, Mp 1300, Mp 162; Standard 2 Mp 283300, Mp 50400, Mp 10850, Mp 2930, Mp 980; Standard 3 Mp 218800, Mp 68900, Mp 10050, Mp 1940, Mp 580; Mp = Molare Masse im Peakmaximum) sind beispielsweise bei der Fa. Merck oder der Fa. Polymer Laboratories kommerziell erhältlich.

Darüber hinaus weisen die Polyester P eine OH-Zahl von 30 bis 300 mg KOH/g, bevorzugt von 50 bis 200 mg KOH/g auf. Im Rahmen der vorliegenden Erfindung erfolgt die Bestimmung der OH-Zahlen nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Darüber hinaus weisen die Polyester P vorzugsweise eine Säurezahl, bestimmt nach DIN EN ISO 2114, von kleiner 100 mg KOH/g, vorzugsweise zwischen 10 und 80 mg KOH/g, bevorzugt zwischen 20 und 60 mg KOH/g auf. Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N ethanolischer Kalilauge gegen Phenolphthalein titriert.

Ein weiterer Bestandteil der Dispergierharze der Formel (I) ist die Gruppe Z, die eine basische Gruppe ist oder ein Rest ist, der eine basische Gruppe enthält. Die Gruppe Z ist insbesondere polyfunktionell, so dass mehr als eine T-P- und/oder T-Gruppe an Z kovalent oder als Salz angebunden sein kann. In einer bevorzugten Ausführungsform handelt es sich bei der Gruppe Z um Polyallylamine oder Poly(C2-4-alkylenimine), wobei Poly(C2-4-alkylenimine) bevorzugt sind.

Das Poly(C2-4-alkylenimin) ist bevorzugt ein Polyethylenimin (PEI), welches linear oder verzweigt sein kann. Vorzugsweise handelt es sich um multifunktionelle, kationische Polyethylenimine mit einer verzweigten Polymerstruktur. Ihre Konstitution wird durch die Summenformel -(CH₂-CH₂-NH)ₙ- mit 10 <n < 10⁵ wiedergegeben. Es handelt sich dabei in der Regel um klare bis leicht trübe, farblose bis gelbliche Flüssigkeiten. Ihre Viskosität ist abhängig vom Molekulargewicht, Konzentration und Verzweigungsgrad.

Das Poly(C2-4-alkylenimin), insbesondere das bevorzugte Polyethylenimin hat bevorzugt ein mittleres Molekulargewicht Mw zwischen 200 und 600.000 g/mol, besonders bevorzugt zwischen 400 und 100.000 g/mol, ganz besonders bevorzugt zwischen 600 und 30.000 g/mol.

Bevorzugte Polyethylenimine sind beispielsweise unter dem Namen Lupasol® von der Fa. BASF SE oder dem Namen EPOMIN der Fa. Nippon Shokubai kommerziell erhältlich.

Bei der Gruppe T handelt es sich um eine die Polymerisation beendende Gruppe. Die die Polymerisation beendende Gruppe wird in diesem Zusammenhang oft auch als Abstopper bezeichnet.

Geeignete, die Polymerisation beendende Gruppen sind Monocarbonsäuren, wobei Monocarbonsäuren, die frei von Aminogruppen sind, insbesondere bevorzugt sind. Bevorzugte Monocarbonsäuren sind C1-25-aliphatische Monocarbonsäuren, die gesättigt oder ungesättigt und durch Hydroxy-, C1-4-Alkoxy-Gruppen oder Halogen substituiert sein können. Bevorzugte aliphatische Monocarbonsäuren enthalten 8 oder mehr Kohlenstoffatome. Wenn die aliphatischen Monocarbonsäuren substituiert sind, handelt es sich bei den Substituenten bevorzugt um Hydroxy-Gruppen. Beispiele für besonders bevorzugte Monocarbonsäuren sind Glykol-, Milch-, Capron-, Laurin-, Stearin-, Methoxyessig-, Rizinol-, 12-Hydroxystearin-, 12-Hydroxydodecan-, 5-Hydroxydodecan-, 5-Hydroxydecan- und 4-Hydroxydecansäuren. Die vorab genannten Säuren können entweder allein oder als Mischungen unterschiedlicher Säuren eingesetzt werden.

Die Wirkung von T als Abstopper beruht auf der Verhinderung des Aufbaus von einem Netzwerk und der entsprechenden Unterdrückung einer Gelbildung. Die Länge der Polyester Kette kann durch die Gegenwart der Gruppe T als Abstopper, beispielsweise durch Einsatz von Monocarbonsäuren während des Herstellungsverfahrens gesteuert werden.

In einer Ausführungsform der vorliegenden Erfindung werden die vorab beschriebenen Verbindungen zur Bildung der Gruppe T, insbesondere Monocarbonsäuren, bereits bei der Synthese der Polyestereinheiten P zugesetzt. In diesen Fällen weisen die Polyestereinheiten T-P eine Zusammensetzung aus 25 bis 80 Gew.-% Di- oder Polycarbonsäuren, 25 bis 80 Gew.-% Diolen oder Polyolen und 1 bis 25 Gew.-% einer die Polymerisation beendende Gruppe, insbesondere einer Monocarbonsäure, auf, wobei die Summe Bestandteile 100 Gew.-% ergeben.

Die Gruppe T, die an den Polyester P gebunden ist, kann sich von der Gruppe T, die direkt an Z gebunden ist, unterscheiden. Dementsprechend können zwei unterschiedliche Gruppen T während der Polyester-Herstellung und der Umsetzung von Gruppen T und den Zwischenstufen T-P mit Z verwendet werden. Nicht auszuschließen ist die Verwendung von unterschiedlichen Gruppen T während der Polyester-Herstellung und deren Umsetzung mit Z.

Das Gewichtsverhältnis von Verbindungen der Gruppe Z, insbesondere der Polyallylamine oder Poly(C2-4-alkylenimine) zu dem Polyester P (nachfolgend auch T-P-COOH genannte) kann in einem großen Bereich variiert werden, abhängig davon, ob das erfindungsgemäße Dispergierharz anschließend zum Dispergieren eines teilchenförmigen Feststoffs in einem polaren oder unpolaren organischen Lösungsmittel verwendet werden soll. Vorteilhafte Ergebnisse werden bei der Verwendung von Dispergierharzen erhalten, wenn des Gewichtsverhältnis von Polyester P (T-P-COOH) zu Verbindungen der Gruppe Z, insbesondere Polyallylaminen oder Poly(C2-4-alkyleniminen) zwischen 30:1 und 1:1 beträgt, bevorzugt zwischen 20:1 und 2:1 und vorzugsweise zwischen 15:1 und 4:1.

Ebenfalls kann die Gruppe T während der Herstellung des Polyesters P ein aliphatischer oder aromatischer Alkohol, T-OH, sein, wobei die Gruppe T, die direkt mit Z verbunden ist, immer eine Monocarbonsäure sein wird. Beispiele von T-OH sind Isopropanol, Isobutanol, tert-Butanol, 2-Ethylbutanol, 3-Heptanol, Octanol, Decanol, Dodecanol, 2-Ethylhexanol, 3,5,5-Trimethylhexanol, 3,7-Dimethyloctanol, Phenol, Alkylphenol. Darüber hinaus eignen sich auch Guerbet-Alkohole. Es handelt sich bei Guerbet-Alkoholen um primäre Alkohole, die in beta-Stellung zur CH₂OH-Gruppe verzweigt sind. Guerbet-Alkohole sind dem Fachmann bekannt, manche sind seit langem kommerziell erhältlich. Sie werden durch die so genannte Guerbet-Reaktion gewonnen, eine seit mehr als 100 Jahren bekannte Dimerisierungs-Reaktion. Geeignete Vertreter der Guerbet-Alkohole sind die kommerziell unter dem Verkaufsnamen Isofol (Condea GmbH) erhältlichen Alkohole.

Die Gruppen T und T-P werden durch die Carbonsäure-Gruppen von T oder des Polyesters P an Z angebunden. Bevorzugte Dispergier Harze leiten sich somit von der Kondensation einer sauren Gruppe des Polyesters (T- P-COOH, d. h. einer P Kette mit einer endständigen Carbonsäuregruppe) und einer sauren Gruppe von zusätzlichem T an Z ab. Bei der sauren Gruppe des Polyesters kann es sich entweder um eine Carbonsäuregruppe der Polyesterbestandteile handeln oder um eine OH-Gruppe des Polyesters, die mit einer Dicarbonsäure bzw. einem Anhydrid nachträglich umgesetzt wurde. Die folgende Reaktionssequenz gibt die grundsätzlichen Reaktionsarten wieder.

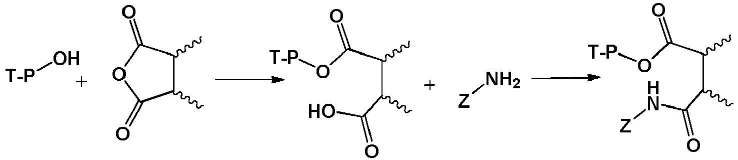

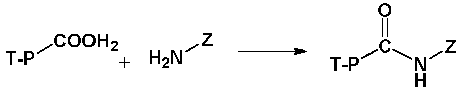

Z, T und P haben die Bedeutung wie vorab definiert.

In einer bevorzugten Ausführungsform der vorliegenden Erfindung umfasst das Dispergierharz ein Polyalkylamin oder ein Poly(C2-4-alkylenimin) als Gruppe Z, an das mindestens zwei gleiche oder unterschiedliche Ketten des Typs T-P angebunden sind. Unterschiedliche Ketten des Typs T-P werden an Z angebunden um typischerweise die Verträglichkeit in den Lack Systemen zu optimieren und einen breiten Anwendungsbereich des Dispergiermittels in vielen Formulierungssystemen zu ermöglichen. Jede Polyester-Kette des vorab genannten Typs T-P ist bevorzugt mit dem Polyallylamin oder Poly(C2-4-alkylenimin) entweder durch eine kovalente Amid-Bindung zwischen einer endständigen Carboxylgruppe der Polyestereinheit P und dem Stickstoffatom einer primären oder sekundären Aminogruppe des Polyallylamins oder Poly(C2-4-alkylenimins) oder durch eine ionische Salzbindung einer Carboxylat-Gruppe der Polyestereinheit P und einem positiv geladenen Stickstoffatom einer substituierten Ammoniumgruppe des Polyallylamins oder Poly(C2-4-alkylenimins) verbunden. Da das Dispergierharz in der bevorzugten Ausführungsform mindestens zwei Polyester Ketten des Typs T-P enthält, kann eine Mischung aus Amid- und Salzbindungen für die jeweiligen Polyester-Ketten vorliegen, abhängig von der Strenge der Reaktionsbedingungen für die Amidierung, die bei Herstellung des Dispergierharzes verwendet wurden um die Polyester-Ketten mit der Gruppe Z zu verknüpfen. Dieses bevorzugte Dispergierharz kann in vereinfachter Form durch die Formel (II) dargestellt werden, 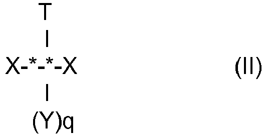 mit
X-*-*-X ein Polyallylamin oder Poly(C2-4-alkylenimin),
Y eine T-P Polyester Kette, die mit dem Polyallylamin oder Poly(C2-4-alkylenimin) durch eine Amid- oder Salzbindung verbunden ist, wobei T und P wie vorab definiert sind und q von 2 bis 2000 beträgt.

Bevorzugt beträgt q mehr als 2 und vorzugsweise nicht weniger als 5. Darüber hinaus ist es auch bevorzugt, wenn q nicht größer als 1000 und bevorzugt nicht größer als 500 ist.

Es ist weiterhin bevorzugt, dass das Gewichtsverhältnis der Einheit Y in Formel (II) zu dem Polyallylamin oder Poly(C2-4-alkylenimin), das in Formel (II) durch X-*-*-X dargestellt ist, zwischen 30 : 1 und 1 : 1 beträgt, besonders bevorzugt zwischen 20 : 1 und 2 : 1 und insbesondere bevorzugt zwischen 15 : 1 und 4 : 1.

Dispergierharze gemäß der vorliegenden Erfindung lassen sich durch Umsetzung der entsprechenden Bestandteile T, P bzw. T-P und Z herstellen. Ein weiterer Gegenstand der vorliegenden Erfindung sind somit Verfahren zur Herstellung der erfindungsgemäßen Dispergierharze umfassend einen ersten Schritt der Kondensation von Di- oder Polycarbonsäuren und Di- oder Polyolen in Gegenwart von die Polymerisation beendenden Gruppen, einen zweiten Schritt der Umsetzung der im ersten Schritt erhaltenen Polyester mit Dicarbonsäuren oder deren Anhydriden zu säurefunktionellen Polyestern und einen dritten Schritt der anschließenden Umsetzung der im zweiten Schritt erhaltenen säurefunktionellen Polyester mit Verbindungen der Gruppe Z. Vorzugsweise sind im dritten Schritt zusätzlich die Polymerisation beendende Gruppen T ebenfalls anwesend.
Im Falle der bevorzugten Ausführungsform der vorliegenden Erfindung gemäß Formel (II) erfolgt die Herstellung durch Umsetzen von Polyallylamin oder einem Poly(C2-4-alkylenimin), insbesondere Polyethylenimin mit einer säurefunktionellen Polyestereinheit P, an die die Gruppe T gebunden vorliegt, wobei gegebenenfalls zusätzliches T hinzugefügt werden kann. In einer bevorzugten Ausführungsform wird bei der vorab beschriebenen Umsetzung zusätzliches T zugegeben.

Beispielsweise kann das Dispergierharz aus Polyallylamin oder Poly(C2-4-alkylenimin), das wenigstens zwei primäre, sekundäre oder tertiäre Aminogruppen hat, und einer Zwischenstufe T-P-COOH abgeleitet werden, wobei die Carboxygruppe der Zwischenstufe T-P-COOH eine Carboxygruppe der Polyestereinheit P ist. Die Aminogruppen des Polyallylamins oder des Poly(C2-4-alkylenimins) und die Carboxylgruppe des Polyesters P können eine Amid- oder Salzbindung bilden. Falls des Poly(C2-4-alkylenimin) nur tertiäre Aminogruppen enthält, können nur Salzbindungen gebildet werden, andernfalls werden Salz- oder Amid-bindungen abhängig von den Reaktionsbedingungen gebildet. Im Allgemeinen unterstützen milde Reaktionsbedingungen wie niedrige Temperaturen und/oder kurze Reaktionszeiten die Bildung von Salzbindungen und strengere Reaktionsbedingungen wie hohe Temperatur und/oder lange Reaktionszeiten die Bildung von Amid-Bindungen. Dieser Umstand ist dem Fachmann bekannt.

Die Umsetzung der Polyallylamine oder Poly(C2-4-alkylenimine) mit den Zwischenstufen T-P-COOH zu den erfindungsgemäßen Dispergierharzen im dritten Schritt des erfindungsgemäßen Verfahrens erfolgt bei einer Temperatur zwischen 50 und 250 °C, bevorzugt unter einer inerten Atmosphäre und wahlweise in der Gegenwart eines Veresterungskatalysators. Bevorzugt beträgt die Temperatur nicht weniger als 80 °C und vorzugsweise nicht weniger als 100 °C. Um ein Verkohlen des zu bildenden Dispergierharzes zu minimieren beträgt die Temperatur bevorzugt nicht mehr als 200 °C und vorzugsweise nicht mehr als 180 °C. Als Inertgas eignet sich grundsätzlich jedes Gas, das nicht mit dem Endprodukt oder den Ausgangsstoffen reagiert, beispielsweise Edelgase oder Stickstoff, wobei Stickstoff bevorzugt eingesetzt wird.

Es ist bevorzugt, die säurefunktionellen Polyester vor der Umsetzung mit dem Polyallylamin oder Poly(C2-4-alkylenimin) getrennt herzustellen. In diesem Fall werden die Di- oder Polycarbonsäuren mit den Diolen oder Polyolen und den bevorzugt als Abstopper T eingesetzten Monocarbonsäuren unter einer inerten Atmosphäre bei 150 bis 250 °C gegebenenfalls in der Gegenwart eines Veresterungskatalysators miteinander umgesetzt und die erhaltenen Polyester anschließend mit Dicarbonsäuren oder deren Anhydriden zu säurefunktionellen Polyestern umgesetzt. Die anschließende Reaktion der so erhaltenen Polyester des Typs T-P-COOH mit Polyallylamin oder Poly(C2-4-alkylenimin) kann dann bei Temperaturen von 50 bis 250 °C, vorzugsweise bei 100 bis 180 °C durchgeführt werden, bevorzugt in der Anwesenheit von T.

Wenn das nach obiger Herstellungsweise erhaltene Dispergierharz freie Aminogruppen enthält, können diese durch Reaktion mit einer Säure oder einem Quaternisierungsmittel in substituierte Ammoniumgruppen umgesetzt werden, so dass das Dispergier Harz in der Form eines substituierten Ammoniumsalzes vorliegt. Geeignete Reagenzien für diesen Zweck sind Mineralsäuren und starke organische Säuren oder saure Salze, wie beispielsweise Essigsäure, Schwefelsäure, Salzsäure, Alkylsulfonsäure, Alkylhydrogensulfate und Arylsulfonsäuren, einschließlich saurer Formen von Farbstoffen und Pigmenten und Quaternisierungsmittel, wie Dialkylsulfate, zum Beispiel Dimethylsulfat (DMS) und Halogenalkane, wie Methyl- und Ethylchlorid.

Weiterer Gegenstand der vorliegenden Erfindung sind Zusammensetzungen enthaltend ein erfindungsgemäßes Dispergierharz. Insbesondere enthalten die Zusammensetzungen der vorliegenden Erfindung ein erfindungsgemäßes Dispergierharz und einen teilchenförmigen Feststoff. In einer weiteren Ausführungsform der vorliegenden Erfindung handelt es sich bei der Zusammensetzung vorzugsweise um eine Dispersion aus einem Dispergierharz der Formel (I), einem teilchenförmigen Feststoff und einem organischen Medium.

Der teilchenförmige Feststoff, der in der Zusammensetzung gemäß der vorliegenden Erfindung vorhanden ist, kann jedes anorganische oder organische feste Material umfassen. Insbesondere ist der teilchenförmige Feststoff im Wesentlichen unlöslich in dem organischen Medium und wird durch das Dispergierharz in einer fein verteilten Form darin stabilisiert.

Beispiele für geeignete Feststoffe sind Farbstoffe, Pigmente, Füllstoffe und andere feste Hilfs- und Zusatzstoffe. Beispiele besonders geeigneter feinteiliger Feststoffe sind insbesondere Pigmente für gelöste Tinten, Pigmente, Streckmittel und Füllmittel für Farben und Kunststoffe, Farbstoffe, insbesondere fein verteilte Farbstoffe, optische Aufhellungsmittel und Zusatzstoffe für Textilien für z. B. flüssige Farbstoffbäder, Tinten und andere flüssige Anwendungssysteme, Feststoffe für Bohrschlämme auf Ölbasis und Invert-Emulsionen, Verschmutzungen und Feststoffpartikel in Flüssigkeiten zur chemischen Reinigung, teilchenförmige Keramikmaterialien, magnetische Materialien und Stoffe zur magnetischen Aufnahme sowie Biozide, Agrochemikalien und Pharmazeutika, welche als Dispersionen in organischen Medien angewendet werden.

Bevorzugt eingesetzte feinteilige Feststoffe sind Pigmente aus einer der anerkannten Klassen von Pigmenten, die zum Beispiel in der Third Edition of the Colour Index (1971) und darauffolgende Neubearbeitungen und Ergänzungen dazu unter dem Kapitel mit dem Titel 'Pigments' beschrieben sind. Beispiele anorganischer Pigmente sind Titandioxid, Zinkoxid, Preußisch Blau, Cadmiumsulfid, Eisenoxide, Zinnober, Ultramarin und die Chrompigmente, einschließlich Chromaten, Molybdaten und gemischten Chromaten und Sulfaten von Blei, Zink, Barium, Calcium und Mischungen und Abwandlungen davon, welche im Handel als grünlich gelbe bis rote Pigmente unter den Namen Primrose, Lemon, Middle, Orange, Scarlet und Red Chromes erhältlich sind. Beispiele für organische Pigmente sind insbesondere ausgewählt aus den Azo-, Diazo-, kondensierten Azo-, Thioindigo-, Indanthron-, Isoindanthron-, Anthanthron-, Anthraquinon-, Isodibenzanthron-, Thriphendioxazin-, Quinacridon- und Phthalocyaninreihen, insbesondere Kupferphthalocyanin und seine am Kern halogenierten Derivate und auch Lacke von sauren, basischen und Beizfarbstoffen. Ruß verhält sich, obwohl es streng anorganisch ist, eher wie ein organisches Pigment bezüglich seiner Dispersionseigenschaften. Bevorzugte organische Pigmente sind Phthalocyanine, vorzugsweise Kupferphthalocyanine, Monoazo-, Diazo-, Indanthron-, Anthanthron-, Quinacridon-Farbstoffe und Ruße.

Andere bevorzugte feinteilige Feststoffe sind Streckmittel und Füllstoffe, wie beispielweise Talk, Kaolin, Siliziumdioxid, Baryt und Kalk, teilchenförmiges keramisches Material, wie Aluminiumoxid, Siliziumdioxid, Zirkoniumdioxid, Titandioxid, Siliziumnitrid, Bornitrid, Siliziumcarbid, Borcarbid, gemischte Silizium-Aluminiumnitride und Metalltitanate, insbesondere magnetische Stoffe, wie die magnetischen Oxide der Übergangsmetalle, vorzugsweise Eisen und Chrom, z. B. gamma-Fe₂O₃, Fe₃O₄ und mit Kobalt dotierte Eisenoxide, Calciumoxid, Ferrite, vorzugsweise Bariumferrite, und Metallteilchen, vorzugsweise metallisches Eisen, Nickel, Kobalt und Legierungen davon, darüber hinaus Agrochemikalien, wie die Fungizide Flutriafen, Carbendazim, Chlorothalonil und Mancozeb.

Bei dem organischen Medium, das vorzugsweise in Zusammensetzung der vorliegenden Erfindung vorhanden ist, handelt es sich bevorzugt um ein polares organisches Medium oder einen unpolaren aromatischen Kohlenwasserstoff oder halogenierten Kohlenwasserstoff. Der Begriff "polar" in Bezug auf das organische Medium bezeichnet eine organische Flüssigkeit oder Harz, die in der Lage ist, mäßige bis starke Bindungen zu bilden, wie in dem Artikel mit dem Titel "A Three Dimensional Approach to Solubility" von Crowley et al. im Journal of Paint Technology, Band 38, 1966 auf Seite 269 beschrieben. Solche organischen Medien haben im Allgemeinen eine Anzahl von Wasserstoffbindungen von fünf oder mehr, wie es in dem oben genannten Artikel definiert ist.

Beispiele geeigneter polarer organischer Medien sind Amine, Ether, vorzugsweise niedrige Alkylether, organische Säuren, Ester, Ketone, Glykole, Alkohole und Amide. Zahlreiche Beispiele solcher Flüssigkeiten mit mäßig starken Wasserstoffbindungen sind in dem Buch mit dem Titel "Compatibility and Solubility" von Ibert Mellan (1968 von Noyes Development Corporation veröffentlicht) in Tabelle 2.14 auf den Seiten 39-40 angegeben. Die in der Veröffentlichung genannten Flüssigkeiten fallen alle in den Bereich des Begriffs für ein polares organisches Medium, und sind somit Bestandteil der vorliegenden Offenbarung.

Bevorzugte polare organische Flüssigkeiten sind Dialkylketone, Alkylester von Alkancarbonsäuren und Alkanolen, Glycole und Glycolester und -ether, Alkanole, und zyklische Ether, vorzugsweise solche Flüssigkeiten, die bis zu einschließlich sechs Kohlenstoffe enthalten. Besonders bevorzugte organische Medien sind Dialkyl- und Cycloalkylketone, wie Aceton, Methylethylketon, Diethylketon, Diisopropylketon, Methylisobutylketon, Diisobutylketon, Methylisoamylketon, Methyln-amylketon und Cyclohexanon, Alkylester wie Methylacetat, Ethylacetat, Isopropylacetat, Butylacetat, Ethylformat, Methylpropionat, Methoxypropylacetat und Ethylbutyrat, Glycole und Glycolester und -ether, wie Ethylenglykol, 2-Ethoxyethanol, 3-Methoxypropylpropanol, 3-Ethoxypropylpropanol, 2-Butoxyethylacetat, 3-Methoxypropylacetat, 3-Ethoxypropylacetat und 2-Ethoxyethylacetat, Alkanole, wie Methanol, Ethanol, n-Propanol, Isopropanol, n-Butanol und Isobutanol, und Dialkylether und zyklische Ether, wie Diethylether und Tetrahydrofuran.

Die im wesentlichen unpolaren Medien, die entweder allein oder als Beimischung mit den vorgenannten polaren organischen Medien verwendet werden können, sind aromatische Kohlenwasserstoffe, wie Toluol und Xylol, und halogenierte aliphatische und aromatische Kohlenwasserstoffe, wie Trichlorethylen, Perchlorethylen und Chlorbenzol.

Beispiele für geeignete polare Harze als Medium für die Dispersionsform der vorliegenden Erfindung sind solche filmbildenden Harze, die für die Herstellung von Tinten, Farben und Spänen zur Verwendung in zahlreichen Anwendungen wie Farben und Tinten geeignet sind. Beispiele für solche Harze umfassen Polyamide, wie z. B. Versamid™ der Fa. BASF SE oder Zelluloseether, wie Ethylzellulose und Ethylhydroxyethylzellulose. Beispiele von Farbharzen umfassen kurzölige Alkyd/Melaminformaldehydharze, Polyester/Melaminformaldehydharze, wärmehärtende Acryl/Melaminformaldehydharze, langölige Alkydharze und mehrschichtige Harze wie Acryl und Harnstoff/Aldehydharze.

Die Dispersion kann, sofern gewünscht, andere Bestandteile enthalten, zum Beispiel Harze (sofern diese nicht bereits das organische Medium darstellen), Bindemittel, verflüssigende Mittel (wie die in GB-A-1508576 und GB-A-2108143 beschriebenen), sedimentationsverhindernde Mittel, Plastifizierungsmittel, Nivellierungsmittel und Konservierungsmittel.

Die Zusammensetzungen der vorliegenden Erfindung, insbesondere die bevorzugten Dispersionen, enthalten üblicherweise von 5 bis 95 Gew.-% des feinteiligen Feststoffs, wobei die genaue Menge von der Art des Feststoffs und der relativen Dichte des Feststoffs und des organischen Mediums abhängt. Zum Beispiel enthält eine Dispersion, in welcher der Feststoff ein organischer Stoff, wie ein organisches Pigment, ist, bevorzugt von 15 bis 60 Gew.-% des Feststoffs, wohingegen eine Dispersion, bei welcher der Feststoff ein anorganischer Stoff, wie ein anorganisches Pigment, Füllmittel oder Streckmittel, ist, bevorzugt von 40 bis 90 Gew.-% des feinteiligen Feststoffs, basierend auf dem Gesamtgewicht der Dispersion, enthält.

Die erfindungsgemäße Zusammensetzung, insbesondere die erfindungsgemäße Dispersion, kann durch irgendeine der gebräuchlichen Verfahren zur Herstellung von Zusammensetzungen beziehungsweise Dispersionen erhalten werden. Der Feststoff, das organische Medium und das erfindungsgemäße Dispergierharz können in der Regel in jeder beliebigen Reihenfolge gemischt werden. Dabei kann die Mischung einem mechanischen Verfahren zur Verkleinerung der Teilchen des Feststoffs auf eine geeignete Größe unterzogen werden, zum Beispiel durch Kugelmahlen, Perlmahlen, Kiesmahlen oder Kunststoffwalzen. Alternativ kann der Feststoff unabhängig oder in Beimischung mit entweder dem organischen Medium oder dem Dispergierharz zur Verkleinerung seiner Teilchengröße behandelt werden, der andere Bestandteil oder Bestandteile der Zusammensetzung danach zugegeben und die Mischung zur Erzeugung der Zusammensetzung, vorzugsweise der Dispersion gerührt werden.

Falls die Zusammensetzung in trockener Form benötigt wird, ist das flüssige Medium bevorzugt flüchtig, so dass es durch einfache Trennmittel, wie Verdampfung leicht von dem teilchenförmigen Feststoff entfernt werden kann. Es ist jedoch bevorzugt, dass die Dispersion das flüssige Medium enthält.

Falls die trockene Zusammensetzung im Wesentlichen aus dem Dispergierharz und dem teilchenförmigen Feststoff besteht, enthält sie bevorzugt wenigstens 0,2 Gew.-%, besonders bevorzugt wenigstens 0,5 Gew.-% und vorzugsweise wenigstens 1,0 Gew.-% des erfindungsgemäßen Dispergierharzes, bezogen auf das Gewicht teilchenförmigen Feststoffs. Bevorzugt enthält die trockene Zusammensetzung nicht mehr als 50 Gew.-% besonders bevorzugt nicht mehr als 20 Gew.-% und vorzugsweise nicht mehr als 10 Gew.-% des erfindungsgemäßen Dispergierharzes, bezogen auf das Gewicht des teilchenförmigen Feststoffs.

Wie oben beschrieben, sind die Dispergierharze der vorliegenden Erfindung besonders geeignet für die Herstellung von Mahlgut. In einer weiteren Ausführungsform der vorliegenden Erfindung kann der teilchenförmige Feststoff in Gegenwart von einem erfindungsgemäßen Dispergierharz und einem filmbildenden Harzbindemittel, gegebenenfalls in Gegenwart eines organischen Mediums, gemahlen werden.

Daher wird gemäß einem weiteren Gesichtspunkt der Erfindung ein Mahlgut zur Verfügung gestellt, das einen teilchenförmigen Feststoff, Dispergierharz gemäß der vorliegenden Erfindung und ein filmbildendes Harz enthält.

Üblicherweise enthält das Mahlgut von 20 bis 70 Gew.-% teilchenförmigen Feststoff in Bezug auf das Gesamtgewicht des Mahlguts. Bevorzugt beträgt der teilchenförmige Feststoff nicht weniger als 30 Gew.-% und vorzugsweise nicht weniger als 50 Gew.-% des Mahlguts.

Die Menge des Harzes in dem Mahlgut kann in einem weiten Bereich schwanken, beträgt aber bevorzugt nicht weniger als 10 Gew.-% und vorzugsweise nicht weniger als 20 Gew.-% in Bezug auf das Gesamtgewicht des Mahlguts.

Die Menge des erfindungsgemäßen Dispergierharzes in dem Mahlgut hängt von der Menge des teilchenförmigen Feststoffs ab, beträgt aber bevorzugt von 0,5 bis 5 Gew.-%, bezogen auf das Mahlgut.

Dispersionen und Mahlgüter, welche die Dispergierharze gemäß der vorliegenden Erfindung enthalten, sind insbesondere geeignet für die Verwendung in Farben, vorzugsweise Farben mit hohem Feststoffgehalt, Tinten, vorzugsweise Tinten für Flexodruck, Tiefdruckfarben und Siebdruckfarben. Darüber hinaus eignen sie sich vorteilhaft für den Einsatz in nicht wässrigen keramischen Verfahren, insbesondere bei der Bandbeschichtung, in Streichverfahren mit einer Rakel, oder in Extrusions-, oder Spritzgieß-Verfahren.

Die Dispergierharze der vorliegenden Erfindung weisen in den genannten Anwendungen Vorteile gegenüber den bekannten Dispergierharzen auf, insbesondere von denen, die auf Polyestern aus Hydroxycarbonsäuren oder Lactonen basieren. Insbesondere weisen die erfindungsgemäßen Dispergierharze eine höhere Löslichkeit in organischen Medien, wie Lösungsmitteln, auf. So scheiden sie in der Regel nicht aus oder kristallisieren, wenn sie bei 4 °C für längere Zeiträume gelagert werden. Bei Lagerung bei niedrigen Temperaturen kann eine Ausscheidung bei -25 °C erfolgen. In diesen Fällen aber lösen sich die Dispergierharze der vorliegenden Erfindung bei Erwärmen auf 4 - 10 °C leicht wieder auf. Werden die Dispergierharze der vorliegenden Erfindung in Farben und Maltinten aufgenommen, so bewirken sie höhere Glanzwerte und niedrigere Trübungswerte in den sich ergebenden Farben und Tinten.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

In den nachfolgenden Beispielen sind alle Mengenangaben, sofern nicht anders angegeben, auf Gewichtsteile bezogen. Amin Zahlen, OH-Zahlen und Säurezahlen werden in mg KOH/g angegeben. Die eingesetzten Monomere und die entsprechenden eingesetzten Monomermengen für die Synthese der Polyester und der erfindungsgemäßen Dispergierharze werden in den folgenden Tabellen genannt, und es werden die Kennzahlen (OH-Zahl, Säurezahl und Molekulargewicht) der erhaltenen Polyester bzw. Dispergierharze angegeben.

### Herstellung von Zwischenstufen

### Beispiel A) Polyester P hergestellt mit Zusatz von Monocarbonsäuren:

Die Polyester Zwischenstufen P werden nach dem Fachmann bekannten Polyesterherstellungsverfahren hergestellt. Dazu wird zuerst eine Kondensation in einem gläsernen Reaktionsgefäß mit einem mechanischen Rührer, einem Thermometer und einem Rückflusskühler unter Inertgas-Atmosphäre zwischen 140 und 160 °C Grad durchgeführt und anschließend die Reaktionstemperatur langsam auf 200 bis 230 °C erhöht wird um eine Säurezahl von kleiner 5 zu erreichen.

Tabelle 1 gibt die Zusammensetzung und die Eigenschaften der hergestellten Polyester P wieder.

### Beispiel B) Polyester P hergestellt mit Zusatz von Monoalkoholen:

Die Polyester Zwischenstufen P werden nach dem Fachmann bekannten Polyesterherstellungsverfahren hergestellt. Dazu wird zuerst eine Kondensation in einem gläsernen Reaktionsgefäß mit einem mechanischen Rührer, einem Thermometer und einem Rückflusskühler unter Inertgas-Atmosphäre zwischen 140 und 160 °C Grad durchgeführt und anschließend die Reaktionstemperatur langsam auf 200 bis 230 °C erhöht wird um eine Säurezahl von kleiner 5 zu erreichen.

Tabelle 2 gibt die Zusammensetzung und die Eigenschaften der hergestellten Polyester P wieder.

**Tabelle 1:**

| **Polyester Bezeichnung** | **Laurinsäure Menge [g]** | **Adipinsäure Menge [g]** | **1,6-Hexandiol Menge [g]** | **1,5-Pentandiol Menge [g]** | **Neopentylglykol Menge [g]** | **Säure Zahl** | **OH-Zahl** | **Molekulargewicht [g/mol]** |
|---|---|---|---|---|---|---|---|---|
| **P-OH_1** | 7,4 | 43,0 | 49,6 | | | 4,0 | 140,0 | 1343 |
| **P-OH_2** | 7,1 | 45,2 | 47,7 | | | 4,2 | 101,9 | 1746 |
| **P-OH_3** | 7,6 | 44,5 | 21,2 | 26,6 | | 4,1 | 145,5 | 1291 |
| **P-OH_4** | 7,3 | 46,8 | 20,3 | 25,6 | | 4,3 | 105,8 | 1682 |
| **P-OH_5** | 14,6 | 42,6 | | | 42,9 | 4,2 | 111,6 | 1385 |
| **P-OH_6** | 13,8 | 45,4 | | | 40,7 | 4,6 | 62,9 | 2012 |
| **P-OH_7** | 14,3 | 41,7 | 16,8 | | 27,2 | 4,1 | 109,0 | 1417 |
| **P-OH_8** | 13,6 | 44,6 | 16,0 | | 25,8 | 4,3 | 61,5 | 2056 |
| **P-OH_9** | 7,6 | 44,5 | 21,2 | 16,7 | 9,9 | 4,1 | 145,2 | 1291 |
| **P-OH_10** | 7,3 | 46,8 | 20,3 | 16,0 | 9,5 | 4,3 | 105,6 | 1682 |

**Tabelle 2**

| **Polyester Bezeichnung** | **Dodecanol Menge [g]** | **Adipinsäure Menge [g]** | **1,6-Hexandiol Menge [g]** | **1,5-Pentandiol Menge [g]** | **Neopentylglykol Menge [g]** | **Säure Zahl** | **OH-Zahl** | **Molekulargewicht [g/mol]** |
|---|---|---|---|---|---|---|---|---|
| **P-OH_11** | 6,6 | 45,4 | 48,0 | | | 3,9 | 146,4 | 1299 |
| **P-OH_12** | 6,2 | 48,8 | 45,0 | | | 4,3 | 86,1 | 2010 |
| **P-OH_13** | 7,1 | 44,8 | 21,3 | 26,8 | | 3,9 | 193,4 | 1297 |
| **P-OH_14** | 6,7 | 48,2 | 20,0 | 25,1 | | 4,2 | 130,3 | 2011 |
| **P-OH_15** | 13,7 | 43,0 | | | 43,3 | 3,7 | 203,0 | 1398 |
| **P-OH_16** | 13,0 | 45,9 | | | 41,1 | 4,0 | 150,5 | 2035 |
| **P-OH_17** | 13,7 | 40,9 | 17,4 | | 28,0 | 3,5 | 220,2 | 1263 |
| **P-OH_18** | 12,9 | 44,5 | 16,3 | | 26,3 | 3,8 | 157,1 | 1912 |
| **P-OH_19** | 7,3 | 43,2 | 21,9 | 17,3 | 10,3 | 3,7 | 222,5 | 1114 |
| **P-OH_20** | 6,8 | 47,7 | 20,2 | 15,9 | 9,4 | 4,2 | 139,0 | 1871 |

### Beispiel 1: Herstellung von Dispergierharzen mit Polyestern gemäß Beispiel A) unter Zusatz von Methylhexahydrophthalsäureanhydrid (MHH-PSA)

Die vorab beschriebenen Polyester-Zwischenstufen gemäß Beispiel A) werden in der Reihenfolge mit Anhydrid (MHH-PSA), Fettsäure (Laurinsäure) und Polyethylenimin (Lupasol® PR 8515 der Fa. BASF SE) vermischt und bei ca. 130 - 150 °C bis auf eine Säurezahl kleiner als 50 umgesetzt, wobei freiwerdendes Wasser abdestilliert wird. Nach der Umsetzung entstehen gelb bis braun viskose ggf. hochviskose aber nicht vernetzte Produkte, die als Dispergierharze verwendet werden können.

Tabelle 3 gibt die Zusammensetzung und die Eigenschaften der hergestellten Dispergierharze wieder.

### Beispiel 2: Herstellung von Dispergierharzen mit Polyestern gemäß Beispiel A) unter Zusatz von Phthalsäureanhydrid (PSA)

Die vorab beschriebenen Polyester-Zwischenstufen gemäß Beispiel A) werden in der Reihenfolge mit Anhydrid (PSA), Fettsäure (Laurinsäure) und Polyethylenimin (Lupasol® PR 8515 der Fa. BASF SE) vermischt und bei ca. 130 - 150 °C bis auf eine Säurezahl kleiner als 50 umgesetzt, wobei freiwerdendes Wasser abdestilliert wird. Nach der Umsetzung entstehen gelb bis braun viskose ggf. hochviskose aber nicht vernetzte Produkte, die als Dispergierharze verwendet werden können.

Tabelle 4 gibt die Zusammensetzung und die Eigenschaften der hergestellten Dispergierharze wieder.

**Tabelle 3**

| **T-P-Z-T Bezeichnung** | **P-OH-Menge [g]** | **P-OH Typ** | **MHH-PSA Menge [g]** | **Laurinsäure Menge [g]** | **Lupasol® PR8515 Menge [g]** | **Amin Zahl** | **SäureZahl** | **OH-Zahl** |
|---|---|---|---|---|---|---|---|---|
| **T-P-Z-T_1** | 100,0 | **P-OH_1** | 20,8 | 33,3 | 20,5 | 78,3 | 35,4 | 109,5 |
| **T-P-Z-T_2** | 100,0 | **P-OH_2** | 15,2 | 24,2 | 14,9 | 64,5 | 29,4 | 94,6 |
| **T-P-Z-T_3** | 100,0 | **P-OH_3** | 21,7 | 34,6 | 21,3 | 80,0 | 36,2 | 111,2 |
| **T-P-Z-T_4** | 100,0 | **P-OH_4** | 15,7 | 25,1 | 15,5 | 66,0 | 30,2 | 96,4 |
| **T-P-Z-T_5** | 100,0 | **P-OH_5** | 16,6 | 26,5 | 16,3 | 68,3 | 31,1 | 99,0 |
| **T-P-Z-T_6** | 100,0 | **P-OH_6** | 9,4 | 14,9 | 9,2 | 46,0 | 21,5 | 71,1 |
| **T-P-Z-T_7** | 100,0 | **P-OH_7** | 16,2 | 25,9 | 15,9 | 67,3 | 30,7 | 97,9 |
| **T-P-Z-T_8** | 100,0 | **P-OH_8** | 9,2 | 14,6 | 9,0 | 45,2 | 21,1 | 70,0 |
| **T-P-Z-T_9** | 100,0 | **P-OH_9** | 21,6 | 34,5 | 21,2 | 79,9 | 36,1 | 111,1 |
| **T-P-Z-T_10** | 100,0 | **P-OH_10** | 15,7 | 25,1 | 15,4 | 66,0 | 30,1 | 96,4 |

**Tabelle 4**

| **T-P-Z-T Bezeichnung** | **P-OH-Menge [g]** | **P-OH Typ** | **PSA Menge [g]** | **Laurinsäure Menge [g]** | **Lupasol® PR8515 Menge [g]** | **Amin Zahl** | **SäureZahl** | **OH-Zahl** |
|---|---|---|---|---|---|---|---|---|
| **T-P-Z-T_11** | 100,0 | **P-OH_1** | 18,5 | 41,6 | 23,6 | 68,7 | 43,9 | 119,0 |
| **T-P-Z-T_12** | 100,0 | **P-OH_2** | 13,4 | 30,3 | 17,2 | 57,1 | 36,8 | 103,3 |
| **T-P-Z-T_13** | 100,0 | **P-OH_3** | 19,2 | 43,2 | 24,5 | 70,1 | 44,8 | 120,8 |
| **T-P-Z-T_14** | 100,0 | **P-OH_4** | 13,9 | 31,4 | 17,8 | 58,4 | 37,6 | 105,2 |
| **T-P-Z-T_15** | 100,0 | **P-OH_5** | 14,7 | 33,1 | 18,8 | 60,3 | 38,8 | 107,9 |
| **T-P-Z-T_16** | 100,0 | **P-OH_6** | 8,3 | 18,7 | 10,6 | 41,2 | 27,1 | 78,1 |
| **T-P-Z-T_17** | 100,0 | **P-OH_7** | 14,4 | 32,4 | 18,4 | 59,5 | 38,2 | 106,8 |
| **T-P-Z-T_18** | 100,0 | **P-OH_8** | 8,1 | 18,3 | 10,4 | 40,5 | 26,6 | 77,0 |
| **T-P-Z-T_19** | 100,0 | **P-OH_9** | 19,2 | 43,1 | 24,5 | 70,1 | 44,8 | 120,7 |
| **T-P-Z-T_20** | 100,0 | **P-OH_10** | 13,9 | 31,4 | 17,8 | 58,3 | 37,6 | 105,1 |

### Beispiel 3: Herstellung von Dispergierharzen mit Polyestern gemäß Beispiel A) unter Zusatz von Methylhexahydrophthalsäureanhydrid (MHH-PSA)

Die vorab beschriebenen Polyester-Zwischenstufen gemäß Beispiel A) werden in der Reihenfolge mit Anhydrid (MHH-PSA), Fettsäure (Ricinolsäure) und Polyethylenimin (Lupasol® PR 8515 der Fa. BASF SE) vermischt und bei ca. 130 - 150 °C bis auf eine Säurezahl kleiner als 50 umgesetzt, wobei freiwerdendes Wasser abdestilliert wird. Nach der Umsetzung entstehen gelb bis braun viskose ggf. hochviskose aber nicht vernetzte Produkte, die als Dispergierharze verwendet werden können.

Tabelle 5 gibt die Zusammensetzung und die Eigenschaften der hergestellten Dispergierharze wieder.

**Tabelle 5**

| **T-P-Z-T Bezeichnung** | **P-OH-Menge [g]** | **P-OH Typ** | **MHH-PSA Menge [g]** | **Ricinolsäure Menge [g]** | **Lupasol® PR8515 Menge [g]** | **Amin Zahl** | **SäureZahl** | **OH-Zahl** |
|---|---|---|---|---|---|---|---|---|
| **T-P-Z-T_41** | 100,0 | **P-OH_1** | 18,5 | 62,0 | 18,0 | 60,7 | 47,6 | 98,2 |
| **T-P-Z-T_42** | 100,0 | **P-OH_2** | 13,4 | 45,2 | 13,1 | 51,1 | 40,3 | 86,3 |
| **T-P-Z-T_43** | 100,0 | **P-OH_3** | 19,2 | 64,5 | 18,8 | 61,9 | 48,6 | 99,5 |
| **T-P-Z-T_44** | 100,0 | **P-OH_4** | 13,9 | 46,9 | 13,6 | 52,2 | 41,2 | 87,8 |
| **T-P-Z-T_45** | 100,0 | **P-OH_5** | 14,7 | 49,4 | 14,4 | 53,8 | 42,4 | 89,9 |
| **T-P-Z-T_46** | 100,0 | **P-OH_6** | 8,3 | 27,9 | 8,1 | 37,5 | 30,1 | 66,4 |
| **T-P-Z-T_47** | 100,0 | **P-OH_7** | 14,4 | 48,3 | 14,1 | 53,1 | 41,9 | 89,0 |
| **T-P-Z-T_48** | 100,0 | **P-OH_8** | 8,1 | 27,3 | 7,9 | 37,0 | 29,6 | 65,5 |
| **T-P-Z-T_49** | 100,0 | **P-OH_9** | 19,2 | 64,4 | 18,7 | 61,8 | 48,5 | 99,4 |
| **T-P-Z-T_50** | 100,0 | **P-OH_10** | 13,9 | 46,8 | 13,6 | 52,2 | 41,2 | 87,7 |

### Beispiel 4: Herstellung von Dispergierharzen mit Polyestern gemäß Beispiel B) unter Zusatz von Methylhexahydrophthalsäureanhydrid (MHH-PSA)

Die vorab beschriebenen Polyester-Zwischenstufen gemäß Beispiel B) werden in der Reihenfolge mit Anhydrid (MHH-PSA), Fettsäure (Laurinsäure) und Polyethylenimin (Lupasol® PR 8515 der Fa. BASF SE) vermischt und bei ca. 130 - 150 °C bis auf eine Säurezahl kleiner als 50 umgesetzt, wobei freiwerdendes Wasser abdestilliert wird. Nach der Umsetzung entstehen gelb bis braun viskose ggf. hochviskose aber nicht vernetzte Produkte, die als Dispergierharze verwendet werden können.

Tabelle 6 gibt die Zusammensetzung und die Eigenschaften der hergestellten Dispergierharze wieder.

### Beispiel 5: Herstellung von Dispergierharzen mit Polyestern gemäß Beispiel B) unter Zusatz von Phthalsäureanhydrid (PSA)

Die vorab beschriebenen Polyester-Zwischenstufen gemäß Beispiel B) werden anschließend in der Reihenfolge mit Anhydrid (PSA), Fettsäure (Laurinsäure) und Polyethylenimin (Lupasol® PR 8515 der Fa. BASF SE) vermischt und bei ca. 130 - 150 °C bis auf eine Säurezahl kleiner als 50 umgesetzt, wobei freiwerdendes Wasser abdestilliert wird. Nach der Umsetzung entstehen gelb bis braun viskose ggf. hochviskose aber nicht vernetzte Produkte, die als Dispergierharze verwendet werden können.

Tabelle 7 gibt die Zusammensetzung und die Eigenschaften der hergestellten Dispergierharze wieder.

**Tabelle 6**

| **T-P-Z-T Bezeichnung** | **P-OH-Menge [g]** | **P-OH Typ** | **MHH-PSA Menge [g]** | **Laurinsäure Menge [g]** | **Lupasol® PR8515 Menge [g]** | **Amin Zahl** | **SäureZahl** | **OH-Zahl** |
|---|---|---|---|---|---|---|---|---|
| **T-P-Z-T_21** | 100,0 | **P-OH_11** | 21,8 | 52,2 | 21,4 | 73,2 | 42,9 | 101,5 |
| **T-P-Z-T_22** | 100,0 | **P-OH_12** | 12,8 | 30,7 | 12,6 | 53,8 | 32,8 | 80,7 |
| **T-P-Z-T_23** | 100,0 | **P-OH_13** | 28,8 | 68,9 | 28,3 | 83,5 | 48,1 | 109,7 |
| **T-P-Z-T_24** | 100,0 | **P-OH_14** | 19,4 | 46,4 | 19,0 | 68,8 | 40,8 | 97,4 |
| **T-P-Z-T_25** | 100,0 | **P-OH_15** | 30,2 | 72,4 | 29,7 | 85,3 | 48,9 | 110,8 |
| **T-P-Z-T_26** | 100,0 | **P-OH_16** | 22,4 | 53,6 | 22,0 | 74,2 | 43,5 | 102,4 |
| **T-P-Z-T_27** | 100,0 | **P-OH_17** | 32,8 | 78,5 | 32,2 | 88,3 | 50,2 | 112,4 |
| **T-P-Z-T_28** | 100,0 | **P-OH_18** | 23,4 | 56,0 | 23,0 | 75,8 | 44,3 | 103,8 |
| **T-P-Z-T_29** | 100,0 | **P-OH_19** | 33,1 | 79,3 | 32,5 | 88,7 | 50,4 | 112,6 |
| **T-P-Z-T_30** | 100,0 | **P-OH_20** | 20,7 | 49,5 | 20,3 | 71,2 | 42,0 | 99,7 |

**Tabelle 7**

| **T-P-Z-T Bezeichnung** | **P-OH-Menge [g]** | **P-OH Typ** | **PSA Menge [g]** | **Laurinsäure Menge [g]** | **Lupasol® PR8515 Menge [g]** | **Amin Zahl** | **SäureZahl** | **OH-Zahl** |
|---|---|---|---|---|---|---|---|---|
| **T-P-Z-T_31** | 100,0 | **P-OH_11** | 19,3 | 43,5 | 18,9 | 69,4 | 41,1 | 111,4 |
| **T-P-Z-T_32** | 100,0 | **P-OH_12** | 11,4 | 25,6 | 11,1 | 50,1 | 30,9 | 86,2 |
| **T-P-Z-T_33** | 100,0 | **P-OH_13** | 25,5 | 57,4 | 24,9 | 80,1 | 46,4 | 122,3 |
| **T-P-Z-T_34** | 100,0 | **P-OH_14** | 17,2 | 38,7 | 16,8 | 65,0 | 38,9 | 106,2 |
| **T-P-Z-T_35** | 100,0 | **P-OH_15** | 26,8 | 60,3 | 26,2 | 82,0 | 47,3 | 123,9 |
| **T-P-Z-T_36** | 100,0 | **P-OH_16** | 19,8 | 44,7 | 19,4 | 70,5 | 41,6 | 112,6 |
| **T-P-Z-T_37** | 100,0 | **P-OH_17** | 29,0 | 65,4 | 28,4 | 85,1 | 48,7 | 126,4 |
| **T-P-Z-T_38** | 100,0 | **P-OH_18** | 20,7 | 46,7 | 20,3 | 72,1 | 42,5 | 114,4 |
| **T-P-Z-T_39** | 100,0 | **P-OH_19** | 29,3 | 66,1 | 28,7 | 85,5 | 49,0 | 126,6 |
| **T-P-Z-T_40** | 100,0 | **P-OH_20** | 18,3 | 41,3 | 17,9 | 67,4 | 40,1 | 109,2 |

## Patentansprüche

1. Dispergierharze der allgemeinen Formel (I),
T-P-Z-T (I)
worin
T eine die Polymerisation beendende Gruppe ist,
Z eine basische Gruppe oder ein Rest, der eine basische Gruppe enthält, ist
P ein Polyester auf Basis von Di- oder Polycarbonsäuren und Di- oder Polyolen ist, einschließlich Salzen von Verbindungen der Formel (I).

2. Dispergierharze gemäß Anspruch 1, **dadurch gekennzeichnet, dass** die Di- oder Polycarbonsäuren ausgewählt sind aus Phthalsäure, Isophthalsäure, Terephthalsäure, 1,2-Cyclohexandicarbonsäure und Isomere, Bernsteinsäure, Sebazinsäure, Methyltetra-, Methylhexahydrophthalsäure, Hexahydrophthalsäure, Tetrahydrophthalsäure, Dodecandisäure, Adipinsäure, Glutarsäure, Citracon-, Fumar-, Itacon-, Malein-, Mesaconsäure, Azelainsäure, Pyromellitsäure und/oder Trimellitsäure, deren Säureanhydride und/oder niedermolekularen Alkylester.

3. Dispergierharze gemäß Anspruch 1 oder 2, **dadurch gekennzeichnet, dass** die Diole oder Polyole ausgewählt sind aus Ethylenglykol, 1,2- und/oder 1,3-Propandiol, Diethylen-, Dipropylen-, Triethylen-, Tetraethylenglykol, 1,2-und/oder 1,4-Butandiol, 1,3-Butylethylpropandiol, 1,3-Methylpropandiol, 1,5-Pentandiol, Cyclohexandimethanol, Dicidol, Glycerin, 1,6-Hexandiol, Neopentylglycol, Bisphenol A, B, C, F, Norbornylenglykol, 1,4-Benzyldimethanol und -ethanol und/oder 2,4-Dimethyl-2-ethylhexan-1,3-diol.

4. Dispergierharze gemäß einem oder mehreren der Ansprüche 1 bis 3, **dadurch gekennzeichnet, dass** die Polyester P ein Mn von 700 bis 10.000 g/mol und ein Mw von 1.500 bis 40.000 g/mol aufweisen.

5. Dispergierharze gemäß einem oder mehreren der Ansprüche 1 bis 4, **dadurch gekennzeichnet, dass** die die Polymerisation beendende Gruppe T Monocarbonsäuren sind.

6. Dispergierharze gemäß einem oder mehreren der Ansprüche 1 bis 5, **dadurch gekennzeichnet, dass** Z Polyallylamine oder Poly(C2-4-alkylenimine) sind.

7. Dispergierharze gemäß einem oder mehreren der Ansprüche 1 bis 6, **dadurch gekennzeichnet, dass** Z ein Polyethylenimin mit einem mittleren Molekulargewicht Mw zwischen 200 und 600.000 g/mol ist.

8. Dispergierharze gemäß einem oder mehreren der Ansprüche 1 bis 7, **dadurch gekennzeichnet, dass** das Gewichtsverhältnis von Polyester P zu Verbindungen der Gruppe Z zwischen 30 : 1 und 1 : 1 beträgt.

9. Verfahren zur Herstellung von Dispergierharzen gemäß Anspruch 1 umfassend einen ersten Schritt der Kondensation von Di- oder Polycarbonsäuren und Di- oder Polyolen in Gegenwart von die Polymerisation beendenden Gruppen, einen zweiten Schritt der Umsetzung der im ersten Schritt erhaltenen Polyester mit Dicarbonsäuren oder deren Anhydriden zu säurefunktionellen Polyestern und einen dritten Schritt der anschließenden Umsetzung der im zweiten Schritt erhaltenen säurefunktionellen Polyester mit Verbindungen der Gruppe Z.

10. Verfahren gemäß Anspruch 9, **dadurch gekennzeichnet, dass** im zweiten Schritt zusätzlich die Polymerisation beendende Gruppen T anwesend sind.

11. Verfahren gemäß Anspruch 9 oder 10, **dadurch gekennzeichnet, dass** der zweite Schritt bei einer Temperatur zwischen 50 und 250 °C erfolgt.

12. Verfahren gemäß einem oder mehreren der Ansprüche 9 bis 11, **dadurch gekennzeichnet, dass** des Gewichtsverhältnis von Polyester zu Verbindungen der Gruppe Z zwischen 30 : 1 und 1 : 1 beträgt, besonders bevorzugt zwischen 20 : 1 und 2 : 1 und insbesondere bevorzugt zwischen 15 : 1 und 4 : 1.

13. Zusammensetzungen enthaltend ein Dispergierharz gemäß Anspruch 1.

14. Zusammensetzungen gemäß Anspruch 13, enthaltend ein Dispergierharz gemäß Anspruch 1 und einen teilchenförmigen Feststoff.

15. Zusammensetzungen gemäß Anspruch 13 oder 14, **dadurch gekennzeichnet, dass** es sich um eine Dispersion aus einem Dispergierharz gemäß Anspruch 1, einem teilchenförmigen Feststoff und einem organischen Medium handelt.

16. Verwendung von Dispergierharzen gemäß Anspruch 1 als Dispergiermittel für Feststoffe.

## Claims

1. Dispersing resins of the general formula (I)
T-P-Z-T (I)
wherein
T is a group terminating the polymerization
Z is a basic group or a residue which contains a basic group, and
P is a polyester based on di- or polycarboxylic acids and di- or polyols, including salts of compounds of the formula (I).

2. Dispersing resins according to Claim 1, **characterized in that** the di- or polycarboxylic acids are selected from phthalic acid, isophthalic acid, terephthalic acid, 1,2-cyclohexanedicarboxylic acid and isomers, succinic acid, sebacic acid, methyltetra-, methylhexahydrophthalic acid, hexahydrophthalic acid, tetrahydrophthalic acid, dodecanedioic acid, adipic acid, glutaric acid, citraconic-, fumaric-, itaconic-, maleic-, mesaconic acid, azelaic acid, pyromellitic acid and/or trimellitic acid, acid anhydrides thereof and/or low molecular weight alkyl esters.

3. Dispersing resins according to Claim 1 or 2, **characterized in that** the diols or polyols are selected from ethylene glycol, 1,2- and/or 1,3-propanediol, diethylene-, dipropylene-, triethylene-, tetraethylene glycol, 1,2- and/or 1,4-butanediol, 1,3-butylethylpropanediol, 1,3-methylpropanediol, 1,5-pentanediol, cyclohexanedimethanol, dicidol, glycerine, 1,6-hexanediol, neopentyl glycol, bisphenol A, B, C, F, norbornylene glycol, 1,4-benzyldimethanol and - ethanol and/or 2,4-dimethyl-2-ethylhexane-1,3-diol.

4. Dispersing resins according to one or more of Claims 1 to 3, **characterized in that** the polyesters P have an Mn of 700 to 10,000 g/mol and an Mw of 1,500 to 40,000 g/mol.

5. Dispersing resins according to one or more of Claims 1 to 4, **characterized in that** the polymerization terminating group T are monocarboxylic acids.

6. Dispersing resins according to one or more of Claims 1 to 5, **characterized in that** Z are polyallylamines or poly(C2-4 alkyleneimines).

7. Dispersing resins according to one or more of Claims 1 to 6, **characterized in that** Z is a polyethyleneimine with an average molecular weight Mw between 200 and 600,000 g/mol.

8. Dispersing resins according to one or more of Claims 1 to 7, **characterized in that** the weight ratio of polyester P to compounds of the group Z is between 30:1 and 1:1.

9. Method for the production of dispersing resins according to Claim 1, comprising a first step of the condensation of di- or polycarboxylic acids and di- or polyols in the presence of groups terminating the polymerization, a second step of the reaction of the polyester obtained in the first step with dicarboxylic acids or anhydrides thereof to give acid-functional polyesters and a third step of the subsequent reaction of the acid-functional polyesters obtained in the second step with compounds of the group Z.

10. Method according to Claim 9, **characterized in that** in the second step additionally the polymerization terminating groups T are present.

11. Method according to Claim 9 or 10, **characterized in that** the second step takes place at a temperature between 50 and 250°C.

12. Method according to one or more of Claims 9 to 11, **characterized in that** the weight ratio of polyester to compounds of the group Z is between 30:1 and 1:1, particularly preferably between 20:1 and 2:1 and especially preferably between 15:1 and 4:1.

13. Compositions containing a dispersing resin according to Claim 1.

14. Compositions according to Claim 13, containing a dispersing resin according to Claim 1 and a particulate solid.

15. Compositions according to Claim 13 or 14, **characterized in that** these are a dispersion of a dispersing resin according to Claim 1, a particulate solid and an organic medium.

16. Use of dispersing resins according to Claim 1 as dispersants for solids.

## Revendications

1. Résines de dispersion de formule générale (I)
T-P-Z-T (I)
dans laquelle
T est un groupe terminant la polymérisation,
Z est un groupe basique ou un radical qui contient un groupe basique,
P est un polyester à base d'acides di- ou polycarboxyliques et de di- ou polyols,
y compris les sels de composés de formule (I).

2. Résines de dispersion selon la revendication 1, **caractérisées en ce que** les acides di- ou polycarboxyliques sont choisis parmi l'acide phtalique, l'acide isophtalique, l'acide téréphtalique, l'acide 1,2-cyclohexanedicarboxylique et ses isomères, l'acide succinique, l'acide sébacique, l'acide méthyltétra-, méthylhexahydrophtalique, l'acide hexahydrophtalique, l'acide tétrahydrophtalique, l'acide dodécanedioïque, l'acide adipique, l'acide glutarique, l'acide citraconique, l'acide fumarique, l'acide itaconique, l'acide maléique, l'acide mésaconique, l'acide azélaïque, l'acide pyroméllitique et/ou l'acide triméllitique, leurs anhydrides acides et/ou leurs esters alkyliques de faible poids moléculaire.

3. Résines de dispersion selon la revendication 1 ou 2, **caractérisées en ce que** les diols ou polyols sont choisis parmi l'éthylène glycol, le 1,2- et/ou 1,3-propanediol, le diéthylène-, dipropylène-, triéthylène-, tétraéthylène glycol, le 1,2- et/ou 1,4-butanediol, le 1,3-butyléthylpropanediol, le 1,3-méthylpropanediol, le 1,5-pentanediol, le cyclohexanediméthanol, le dicidol, la glycérine, le 1,6-hexanediol, le néopentylglycol, le bisphénol A, B, C, F, le norbornylène glycol, le 1,4-benzyldiméthanol et -éthanol et/ou le 2,4-diméthyl-2-éthylhexane-1,3-diol.

4. Résines de dispersion selon une ou plusieurs des revendications 1 à 3, **caractérisées en ce que** les polyesters P présentent un Mn de 700 à 10 000 g/mol et un Mw de 1 500 à 40 000 g/mol.

5. Résines de dispersion selon une ou plusieurs des revendications 1 à 4, **caractérisées en ce que** le groupe T terminant la polymérisation correspond à des acides monocarboxyliques.

6. Résines de dispersion selon une ou plusieurs des revendications 1 à 5, **caractérisées en ce que** les Z sont des polyallylamines ou des poly(alkylène-imines en C2-4) .

7. Résines de dispersion selon une ou plusieurs des revendications 1 à 6, **caractérisées en ce que** Z est une polyéthylène-imine ayant un poids moléculaire moyen Mw compris entre 200 et 600 000 g/mol.

8. Résines de dispersion selon une ou plusieurs des revendications 1 à 7, **caractérisées en ce que** le rapport en poids entre les polyesters P et les composés du groupe Z est compris entre 30:1 et 1:1.

9. Procédé de fabrication de résines de dispersion selon la revendication 1, comprenant une première étape de condensation d'acides di- ou polycarboxyliques et de di- ou polyols en présence de groupes terminant la polymérisation, une deuxième étape de mise en réaction des polyesters obtenus lors de la première étape avec des acides dicarboxyliques ou leurs anhydrides pour former des polyesters à fonction acide, et une troisième étape de mise en réaction ultérieure des polyesters à fonction acide obtenus lors de la deuxième étape avec des composés du groupe Z.

10. Procédé selon la revendication 9, **caractérisé en ce que** les groupes T terminant la polymérisation sont en outre présents lors de la deuxième étape.

11. Procédé selon la revendication 9 ou 10, **caractérisé en ce que** la deuxième étape a lieu à une température comprise entre 50 et 250 °C.

12. Procédé selon une ou plusieurs des revendications 9 à 11, **caractérisé en ce que** le rapport en poids entre les polyesters et les composés du groupe Z est compris entre 30:1 et 1:1, de manière particulièrement préférée entre 20:1 et 2:1, et de manière notamment préférée entre 15:1 et 4:1.

13. Compositions contenant une résine de dispersion selon la revendication 1.

14. Compositions selon la revendication 13, contenant une résine de dispersion selon la revendication 1 et un solide particulaire.

15. Compositions selon la revendication 13 ou 14, **caractérisées en ce qu'**il s'agit d'une dispersion d'une résine de dispersion selon la revendication 1, d'un solide particulaire et d'un milieu organique.

16. Utilisation de résines de dispersion selon la revendication 1 en tant qu'agents de dispersion pour solides.
